# EUROPÄISCHE PATENTSCHRIFT

(11) **EP 1 334 987 B1**
(45) Veröffentlichungstag und Bekanntmachung des Hinweises auf die Patenterteilung: **09.08.2006**
(21) Anmeldenummer: 02024792.0
(22) Anmeldetag: 07.11.2002
(51) Int. Cl.: C08G 18/18, C08G 18/79, C09D 5/03, C09D 175/06, C09D 175/04

(54) **Bei niedriger Temperatur härtbare feste uretdiongruppenhaltige Polyurethan-Pulverlackzusammensetzungen**
Low temperature curable solid powder lacquer compositions containing urethdione groups
Compositions de revêtement pulvérulentes solides durcissables à basse température contenant des groupes d'uréthdione

(30) Priorität: 11.02.2002 DE 10205608
(43) Veröffentlichungstag der Anmeldung: 13.08.2003
(73) Patentinhaber: Degussa AG, 40474 Düsseldorf (DE)
(72) Erfinder: Spyrou, Emmanouil, Dr., 45772 Marl (DE); Loesch, Holger, 44672 Herne (DE); Wenning, Andreas, Dr., 48301 Nottuln (DE)

(56) Entgegenhaltungen:
- WO-A-99/64233
- DE-A- 19 856 878
- US-A- 4 732 957
- US-A- 5 464 921

## Beschreibung

Die Erfindung betrifft feste uretdiongruppenhaltige Polyurethan-Pulverlackzusammensetzungen, die bei niedrigen Einbrenntemperaturen aushärten, Verfahren zur Herstellung derartiger Zusammensetzungen sowie deren Verwendung zur Herstellung von Kunststoffen, insbesondere Pulverlackbeschichtungen, die zu hochglänzenden oder matten, licht- und wetterstabilen Lackfilmen vernetzen.

Bei Raumtemperatur feste, extern oder intern blockierte Polyisocyanate stellen wertvolle Vernetzer für thermisch vernetzbare Polyurethan (PUR)-Pulverlackzusammensetzungen dar.

So beschreibt z. B. die DE-OS 27 35 497 PUR-Pulverlacke mit hervorragender Witterungsund Wärmestabilität. Die Vernetzer, deren Herstellung in der DE-OS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 3030539 und DE-OS 3030572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf. Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzung wird in der EP 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In EP 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z.B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metall-acetylacetonaten, z. B. Zinkacetylacetonat, beansprucht. Solche Katalysatoren sind tatsächlich in der Lage, die Aushärtungstemperatur von uretdiongruppenhaltige Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" *International Waterborne, High solids and Powder Coatings Symposium, New Orleans*, 21 - 23. 2. 2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

Aufgabe der vorliegenden Erfindung war es daher, hochreaktive uretdiongruppenhaltige Polyurethan-Pulverlackzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen Pulverlackbeschichtungen eignen.

Überraschend wurde gefunden, dass quarternäre Ammoniumsalze mit Hydroxiden oder Fluoriden als Gegenion die Rückspaltung von Uretdiongruppen so stark beschleunigen, so dass sich bei Verwendung bekannter uretdionhaltiger Pulverlackhärter die Aushärtetemperatur von Pulverlackzusammensetzungen beträchtlich erniedrigen lässt.

Gegenstand der vorliegenden Erfindung ist eine Polyurethan-Pulverlackzusammensetzung, im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
D) gegebenenfalls eine reaktive Verbindung, die sich bei erhöhten Temperaturen mit den gegebenenfalls vorhandenen Säuregruppen der Komponente B) umsetzen kann, E) gegebenenfalls aus der Pulverlackchemie bekannte Hilfs- und Zusatzstoffe,
so dass die beiden Komponenten A) und B) in dem Verhältnis vorliegen, dass auf jede Hydroxylgruppe der Komponente B) 0,3 bis 1 Uretdiongruppe der Komponente A) entfällt, der Anteil des Katalysators unter C) 0,001 - 3 Gew.-% an der Gesamtmenge der Komponenten A) und B) beträgt und D) gegebenenfalls in der Menge vorliegt, dass auf jede Säuregruppe des Harzes unter B) 0,1 - 10 Säure abfangende Einheiten der reaktiven Verbindung D) entfallen.

Weiterer Gegenstand der Erfindung ist auch ein Verfahren zur Herstellung der Pulverlackzusammensetzungen.

Gegenstand der Erfindung ist auch die Verwendung der erfindungsgemäßen Pulverlackzusammensetzungen zur Herstellung von Pulverlackbeschichtungen auf Metall-, Kunststoff-, Glas-, Holz-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammensetzungen, Lederbeschichtungszusammen-setzungen und Kunststoffbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺[R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

Uretdiongruppen enthaltende Polyisocyanate sind wohlbekannt und werden beispielsweise in US 4 476 054, US 4 912 210, US 4 929 724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäuretriamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), 2-Methylpentandiisocyanat (MPDI), 2,2,4-Trimethyl-hexamethylendiisocyanat/2,4,4-Trimethyl-hexamethylendiisocyanat (TMDI), Norbornandiisocyanat (NBDI), Methylendiphenyldiisocyanat (MDI) und Tetramethylxylylendiisocyanat (TMXDI) bevorzugt verwendet. Ganz besonders bevorzugt werden IPDI und HDI.

Die Umsetzung dieser uretdiongruppentragenden Polyisocyanate zu Uretdiongruppen aufweisenden Pulverlackhärtern A) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524). Bevorzugte Uretdiongruppen aufweisende Pulverlackhärter A) haben einen freien NCO-Gehalt von weniger als 5 Gew.-% und einen Gehalt an Uretdiongruppen von 6 bis 18 Gew.-% (berechnet als C₂N₂O₂, Molekulargewicht 84). Bevorzugt werden Polyester und monomere Dialkohole. Außer den Uretdiongruppen können die Pulverlackhärter auch Isocyanurat-, Biuret-, Allophanat-, Urethan- und/oder Harnstoff-Strukturen aufweisen.

Bei den hydroxylgruppenhaltigen Polymeren B) werden bevorzugt Polyester, Polyether, Polyacrylate, Polyurethane und/oder Polycarbonate mit einer OH-Zahl von 20 - 200 (in mg KOH/Gramm) eingesetzt. Besonders bevorzugt werden Polyester mit einer OH-Zahl von 30-150, einem mittleren Molekulargewicht von 500 - 6000 g/mol und einem Schmelzpunkt zwischen 40 und 130 °C verwendet. Solche Bindemittel sind beispielsweise in EP 669 354 und EP 254 152 beschrieben worden. Selbstverständlich können auch Mischungen solcher Polymere eingesetzt werden. Die Menge an den hydroxylgruppenhaltigen Polymeren B) wird so gewählt, dass auf jede Hydroxylgruppe der Komponente B) 0,3 bis 1 Uretdiongruppe der Komponente A) entfällt.

Gegenstand der Erfindung ist auch die Verwendung mindestens eines Katalysators der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet, in uretdiongruppenhaltigen Polyurethan-Pulverlackzusammensetzungen.

Die erfindungswesentlichen Katalysatoren C) sind quartenäre Ammoniumsalze der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppe, Doppelbindungen, Dreifachbindungen oder Halogenatome aufweisen kann, und R⁵ entweder OH oder F bedeutet, wie z. B. Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid,. Besonders bevorzugt wird Tetrabutylammoniumhydroxyd. Selbstverständlich kommen auch Mischungen solcher Katalysatoren in Frage. Sie sind in einer Menge von 0,001 - 3 Gew.-%, bevorzugt 0,01 - 3 Gew.-%, bezogen auf die Komponenten A) und B) in der Pulverlackzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Ein weiterer wesentlicher Vorteil solcher quarternärer Ammoniumsalze ist auch darin gegeben, dass solche Verbindungen am Stickstoffatom nicht oxidierbar sind. Eine unerwünschte Vergilbung der Pulverlackbeschichtungen durch N-Oxide ist damit ausgeschlossen.

Eine erfindungsgemäße Variante schließt die polymere Anbindung solcher Katalysatoren C) an Pulverlackhärter A) oder hydroxylgruppenhaltige Polymere B) mit ein. So können z. B. freie Alkohol-, Thio- oder Aminogruppen der Ammoniumsalze mit Säure-, Isocyanat-, oder Glycidylgruppen der Pulverlackhärter A) oder hydroxylgruppenhaltige Polymere B) umgesetzt werden, um die Katalysatoren C) in den polymeren Verbund zu integrieren.

Beachtet werden muss in diesem Zusammenhang, dass die Aktivität dieser Katalysatoren in Anwesenheit von Säuren deutlich abnimmt. Zu den herkömmlichen Reaktionspartnern der uretdionhaltiger Pulverlackhärter gehören hydroxylgruppenhaltige Polyester. Aufgrund der Herstellungsweise von Polyestern tragen diese mitunter in geringem Umfang noch Säuregruppen. In Gegenwart von solchen Säuregruppen tragenden Polyestern bietet es sich daher an, die erwähnten Katalysatoren entweder im Überschuss bezogen auf die Säuregruppen zu verwenden, oder aber reaktive Verbindungen zuzusetzen, die in der Lage sind, Säuregruppen abzufangen.

Reaktive säureabfangende Verbindungen D) sind in der Lackchemie allgemein bekannt. So setzen sich beispielsweise Epoxyverbindungen, Carbodiimide oder aber auch 2-Oxazoline mit Säuregruppen bei erhöhten Temperaturen um. In Frage kommen dabei z. B. Triglycidyletherisocyanurat (TGIC), EPIKOTE 828 (Diglycidylether auf Basis Bisphenol A, Shell), aber auch Phenylenbisoxazolin, 2-Methyl-2-oxazolin, 2-Hydroxyethyl-2-oxazolin, 2-Hydroxypropyl-2-oxazolin und 5-Hydroxypentyl-2-oxazolin. Selbstverständlich kommen auch Mischungen solcher Substanzen in Frage. Diese reaktive Verbindung D) wird lediglich bei Anwesenheit von Säurengruppen in der Pulverlackzusammensetzung eingesetzt. Sind solche Säuregruppen in der Pulverlack-zusammensetzung enthalten, wird soviel der reaktiven Komponente D) zugesetzt; dass auf jede Säuregruppe 0,1 - 10 Säure abfangende Einheiten der Komponente D) entfallen. Zusätzlich können Katalysatoren, die diese Reaktion beschleunigenwie z. B. Benzyltrimethylammoniumchlorid, eingesetzt werden.

Für die Pulverlackherstellung können die in der Pulverlacktechnologie üblichen Zusatzstoffe E) wie Verlaufsmittel, z. B. Polysilicone oder Acrylate, Lichtschutzmittel z. B. sterisch gehinderteAmine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganischen Katalysatoren, wie z. B. Dibutylzinndilaurat, oder aber tertiäre Amine, wie z. B. 1,4-Diazabicylco[2.2.2.]octan, in Mengen von 0,001-1 Gew.-%.

Herkömmliche uretdionhaltige Pulverlackzusammensetzungen lassen sich unter normalen Bedingungen (DBTL-Katalyse) erst ab 180 °C aushärten. Mit Hilfe der erfindungsgemäßen Niedrigtemperatur härtenden Pulverlackzusammensetzungen kann bei maximal 160 °C Aushärtungstemperatur (auch geringere Aushärtungstemperaturen sind durchaus möglich) nicht nur Energie und (Aushärtungs-)Zeit gespart werden, sondern es lassen sich auch viele temperatursensible Substrate beschichten, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C erhitzt.

Nachfolgend wird der Gegenstand der Erfindung anhand von Beispielen näher erläutert.

### Beispiele:

| **Einsatzstoffe** | **Produktbeschreibung, Hersteller** |
|---|---|
| VESTAGON BF 1320 | Pulverlackhärter, Degussa AG, Coatings & Colorants, Uretdion-Gehalt: 13,8 %, Schmp.: 99-112 °C, T_{G}: 87 °C |
| Crylcoat 240 | OH-Polyester, OH-Zahl: 24,5; SZ: 3,3; UCB |
| Araldit PT 810 | Triglycidyletherisocyanurat (TGIC), Vantico |
| KRONOS 2160 | Titandioxid, Kronos |
| RESIFLOW PV 88 | Verlaufsmittel, Worlee |
| BTAC | Benzyltrimethylammoniumchlorid, Aldrich |
| TMAH | Tetramethylammoniumhydroxid WG: 50, Aldrich |
| TBAH | Tetrabutylammoniumhydroxid, WG: 68, Aldrich |
| BTMAF | Benzyltrimethylammoniumfluorid, WG: 12, Aldrich |
| DBTL | Dibutylzinndilaurat, Crompton Vinyl Additives GmbH |

OH-Zahl: Verbrauch mg KOH/g Polymer; SZ: Säurezahl, Verbrauch mg KOH/g Polymer Schmp.: Schmelzpunkt; T_{G}: Glasübergangspunkt; WG: Wassergehalt in Gew.-% (Der Wassergehalt der Katalysatoren wurde beim Einsatz nicht berücksichtigt, d. h. die wasserfreie Menge der eingesetzten Katalysatoren unterscheidet sich in den einzelnen Versuchen z. T. beträchtlich voneinander.)

Allgemeine Herstellungsvorschrift für die Pulverlacke: Die zerkleinerten Einsatzstoffe - Pulverlackhärter, hydroxyfunktionelle Polymere, Katalysatoren, Säurefänger, Verlaufsmittel - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete Eisenbleche appliziert und in einem Umlufttrockenschrank eingebrannt.

**Pulverlack-Zusammensetzungen (Angaben in Gew.-%, außer bei OH/UD):**

| **Beispiele** | **VESTAGON BF 1320** | **Crylcoat 240** | **TMAH** | **TBAH** | **BTMAF** | **DBTL** | **OH/UD** |
|---|---|---|---|---|---|---|---|
| 1 | 10,43 | 46,11 | 0,46 | | | | 1,00:0,75 |
| 2 | 13,07 | 43,35 | 0,58 | | | | 1,00:1,00 |
| 3 | 10,43 | 46,11 | | 0,46 | | | 1,00:0,75 |
| 4 | 13,07 | 43,35 | | 0,58 | | | 1,00:1,00 |
| 5 | 10,43 | 46,11 | | | 0,46 | | 1,00:0,75 |
| 6 | 13,07 | 43,35 | | | 0,58 | | 1,00:1,00 |
| V1* | 10,43 | 46,11 | | | | 0,46 | 1,00 : 0,75 |
| V2* | 13,07 | 43,35 | | | | 0,58 | 1,00 : 1,00 |

| | | | | | | | |
|---|---|---|---|---|---|---|---|
| * nicht erfindungsgemäße Vergleichsbeispiele | | | | | | | |

OH/UD: Verhältnis OH-Gruppen zu Uretdiongruppen (Mol:Mol) Zusätzlich wurden in jeder der Formulierungen 40,0 Gew.-% KRONOS 2160, 1,0 Gew.-% RESIFLOW PV 88, 1,5 Gew.-% Araldit PT 810 und 0,5 Gew.-% BTAC eingesetzt.

**Ergebnisse der Aushärtung nach 30 min bei 160 °C:**

| **Beispiele** | **Erichsentiefung [mm]** | **Kugelschlagdirekt [inch • lb]** | **Yi** | **Bemerkung** |
|---|---|---|---|---|
| 1 | > 10,0 | 90 | 1,5 | ausgehärtet |
| 2 | 5,0 | 80 | 3,0 | teilweise ausgehärtet |
| 3 | > 10,0 | 140 | 1,0 | ausgehärtet |
| 4 | > 10,0 | > 160 | 1,1 | ausgehärtet |
| 5 | 9,5 | 90 | 1,0 | ausgehärtet |
| 6 | 4,0 | 70 | 1,4 | teilweise ausgehärtet |
| | | | | |
| VI* | 0,5 | 30 | 1,1 | nicht ausgehärtet |
| V2* | 0,5 | 20 | 1,2 | nicht ausgehärtet |

Erichsentiefung nach DIN 53 156 Kugelschlag nach ASTM D 2794-93 Yi: Yellowness-Index DIN 5033

## Patentansprüche

1. Polyurethan-Pulverlackzusammensetzung im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.% und einem Uretdiongehalt von 6 - 18 Gew.%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

2. Polyurethan-Pulverlackzusammensetzung gemäß Anspruch 1,
**dadurch gekennzeichnet,**
D) **dass** zusätzlich eine reaktive Verbindung, die sich bei erhöhten Temperaturen mit den gegebenenfalls vorhandenen Säuregruppen der Komponente B) umsetzen kann in der Menge vorliegt, dass auf jede Säuregruppe des Harzes unter B) 0,1 - 10 Säure abfangende Einheiten der reaktiven Verbindung D) entfallen.

3. Polyurethan-Pulverlackzusammensetzung nach Anspruch 1 oder 2,
**dadurch gekennzeichnet,**
E) **dass** Hilfs- und Zusatzstoffe enthalten sind.

4. Polyurethan-Pulverlackzusammensetzungen nach mindestens einem der Ansprüche 1 bis 3,
**dadurch gekennzeichnet,**
**dass** uretdionhaltige Pulverlackhärter A) auf Basis von Isophorondüsocyanat (IPDI), Hexamethylendiisocyanat (HDI), 2-Methylpentadüsocyanat (MPDI), 2,2,4-Trimethylhexamethylendiisocyanat/2,4,4- Trimethyl-hexamethylendiisocyanat (TMDI), Norbornandiisocyanat (NBDI), Methylendiphenyldüsocyanat (MDI) und Tetramethylxylylendiisocyanat (TMXDI), allein oder in Mischungen, enthalten sind.

5. Polyurethan-Pulverlackzusammensetzungen nach Anspruch 4,
**dadurch gekennzeichnet,**
**dass** uretdionhaltige Pulverlackhärter auf Basis von IPDI und/oder HDI enthalten sind.

6. Polyurethan-Pulverlackzusammensetzungen nach mindestens einem der Ansprüche 1 bis 5,
**dadurch gekennzeichnet,**
**dass** uretdionhaltige Pulverlackverhärter A) auf Basis hydroxylgruppenhaltiger Polyester, Polythioether, Polyether, Polycaprolactame, Polyepoxide, Polyesteramide, Polyurethane, niedermolekulare Di-, Tri- und/oder Tetraalkohole, Monoamine und/oder Monoalkohole, allein oder in Mischungen, enthalten sind.

7. Polyurethan-Pulverlackzusammensetzungen nach Anspruch 6,
**dadurch gekennzeichnet,**
**dass** Polyester und/oder monomere Dialkohole enthalten sind.

8. Polyurethan-Pulverlackzusammensetzungen nach mindestens einem der Ansprüche 1 bis 7,
**dadurch gekennzeichnet,**
**dass** als hydroxylgruppenhaltige Polymere B) Polyester, Polyether, Polyacrylate, Polyurethane und Polycarbonate, allein oder in Mischungen, enthalten sind.

9. Polyurethan-Pulverlackzusammensetzungen nach Anspruch 8,
**dadurch gekennzeichnet,**
**dass** Polyester mit einer OH-Zahl von 30 bis 150 mg KOH/g, einem mittleren Molekulargewicht von 500 bis 6000 g/mol und einem Schmelzpunkt zwischen 40 und 130 °C, enthalten sind.

10. Polyurethan-Pulverlackzusammensetzungen nach mindestens einem der Ansprüche 1 bis 9,
**dadurch gekennzeichnet,**
**dass** als Katalysatoren C) Tetraalkylammoniumhydroxid und/oder -fluorid enthalten sind.

11. Polyurethan-Pulverlackzusamnaensetzungen nach mindestens einem der Ansprüche 1 bis 10,
**dadurch gekennzeichnet,**
**dass** Katalysatoren C), ausgewählt aus Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid, allein oder in Mischungen, enthalten sind.

12. Polyurethan-Pulverlackzusammensetzungen nach mindestens einem der Ansprüche 1 bis 11,
**dadurch gekennzeichnet,**
**dass** als Komponente D) Epoxyverbindungen, Carbodiimide und/oder 2-Oxazoline enthalten sind.

13. Polyurethan-Pulverlackzusammensetzungen nach Anspruch 12,
**dadurch gekennzeichnet,**
**dass** Triglycidyletherisocyanurat, EPIKOTE 828, Phenylenbisoxazolin, 2-Methyl-2-oxazolin,X2-Hydroxyethyl-2-oxazolin, 2-Hydroxypropyl-2-oxazolin und/oder 5-Hydroxypentyl-2-oxazolin, allein oder in Mischungen, enthalten sind.

14. Polyurethan-Pulverlackzusammensetzungen nach mindestens einem der Ansprüche 1 bis 13,
**dadurch gekennzeichnet,**
**dass** als Hilfs- und Zusatzstoffe E) Verlaufsmittel, Lichtschutzmittel, Füllstoff, zusätzliche Katalysatoren und/oder Pigmente enthalten sind.

15. Verfahren zur Herstellung von Polyurethan-Pulverlackzusammensetzungen, im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, in beheizbaren Aggregaten bei einer Temperaturobergrenze von 120 bis 130 °C.

16. Verwendung mindestens eines Katalysators der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet, in uretdiongruppenhaltigen Polyurethan-Pulverlackzusammensetzungen.

17. Verwendung nach Anspruch 16,
**dadurch gekennzeichnet,**
**dass** Verbindungen, ausgewählt aus Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid, eingesetzt werden. Tetramethylammoniumfluorid, Tetraethylammoniumfluorid, Tetrabutylammoniumfluorid, Tetraoctylammoniumfluorid und Benzyltrimethylammoniumfluorid, eingesetzt werden.

18. Verwendung von
A) mindestens einem uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.% und einem Uretdiongehalt von 6 - 18 Gew.-%,
B) mindestens einem hydroxylgruppenhaltigen Polymer mit einem Schmelzpunkt von 40 bis 130 °C und einer OH-Zahl zwischen 20 und 200 mg KOH / Gramm,
C) mindestens einem Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, zur Herstellung von Pulverlackbeschichtungen.

19. Verwendung nach Anspruch 18,
**dadurch gekennzeichnet,**
**dass** Ausgangsverbindungen nach mindestens einem der Ansprüche 2 bis 14 enthalten sind.

20. Verwendung nach Anspruch 18 - 19 zur Herstellung von Pulverlackbeschichtungen auf Metall-, Kunststoff-, Holz-, Glas-, Leder- oder sonstigen hitzeresistenten Untergründen.

21. Metallbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6-18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

22. Holzbeschichtungszusammensetzung, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

23. Lederbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1 - 18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

24. Kunststoffbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel [NR¹R²R³R⁴]⁺ [R⁵]⁻, wobei R¹ - R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ - R⁴ verbrückt, unter Ausbildung von Cyclen, Bicyclen oder Tricyclen und die Verbrückungsatome neben Kohlenstoff auch Heteroatome sein können, mit 1-18 Kohlenstoffatomen darstellen und jeder Rest R¹ - R⁴ zusätzlich noch eine oder mehrere Alkohol-, Amino-, Ester-, Keto-, Thio-, Urethan-, Harnstoff-, Allophanatgruppe, Doppelbindungen, Dreifachbindungen oder Halogenatome aufweisen kann, und R⁵ entweder OH oder F bedeutet,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

25. Metallbeschichtung nach Anspruch 21 für Automobilkarossen, Motor- und Fahrräder, Gebäudeteile und Haushaltsgeräte.

26. Beschichtungszusammensetzungen nach einem der Ansprüche 21 bis 25,
**dadurch gekennzeichnet,**
D) **dass** zusätzlich eine reaktive Verbindung, die sich bei erhöhten Temperaturen mit den gegebenenfalls vorhandenen Säuregruppen der Komponente B) umsetzen kann in der Menge vorliegt, dass auf jede Säuregruppe des Harzes unter B) 0,1 - 10 Säure abfangende Einheiten der reaktiven Verbindung D) entfallen.

27. Beschichtungszusammensetzungen nach einem der Ansprüche 21 bis 26,
**dadurch gekennzeichnet,**
**dass** Hilfs- und Zusatzstoffe E) enthalten sind.

28. Beschichtungszusammensetzungen nach einem der Ansprüche 21 bis 27,
**dadurch gekennzeichnet,**
**dass** diese Verbindungen nach mindestens einem der Ansprüche 2 bis 14 enthalten.

## Claims

1. A polyurethane powder coating composition essentially containing
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺ [R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B).

2. A polyurethane powder coating composition according to claim 1, **characterized in that**
D) a reactive compound is also present which is able to react at elevated temperature with any acid group that may be present in component B), in an amount such that for each acid group of the resin under B) there are 0.1-10 acid-scavenging units of the reactive compound D).

3. A polyurethane powder coating composition according to either of claims 1 and 2,
**characterized in that**
E) auxiliaries and additives are present.

4. A polyurethane powder coating composition according to at least one of claims 1 to 3, **characterized in that** a uretdione-containing powder coating hardener A) based on isophorone diisocyanate (IPDI), hexamethylene diisocyanate (HDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), methylenediphenyl diisocyanate (MDI), and tetramethylxylylene diisocyanate (TMXDI), alone or in a mixture, is present.

5. A polyurethane powder coating composition according to claim 4, **characterized in that** a uretdione-containing powder coating hardener based on IPDI and/or HDI is present.

6. A polyurethane powder coating composition according to at least one of claims 1 to 5, **characterized in that** a uretdione-containing powder coating hardener A) based on hydroxyl-containing polyesters, polythioethers, polyethers, polycaprolactams, polyepoxides, polyesteramides, polyurethanes, low molecular mass di-, tri- and/or tetraalcohols, monoamines and/or monoalcohols, alone or in a mixture is present.

7. A polyurethane powder coating composition according to claim 6, **characterized in that** polyesters and/or monomeric dialcohols are present.

8. A polyurethane powder coating composition according to at least one of claims 1 to 7, **characterized in that** polyesters are present, polyethers, polyacrylates, polyurethanes, and polycarbonates are present, alone or in a mixture, as hydroxyl-containing polymer B).

9. A polyurethane powder coating composition according to claim 8, **characterized in that** a polyester having an OH number of from 30 to 150 mg KOH/g, an average molecular weight of from 500 to 6000 g/mol, and a melting point of between 40 and 130°C is present.

10. A polyurethane powder coating composition according to at least one of claims 1 to 9, **characterized in that** tetraalkylammonium hydroxide and/or tetraalkylammonium fluoride are present as catalyst C).

11. A polyurethane powder coating composition according to at least one of claims 1 to 10, **characterized in that** a catalyst C) selected from methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride, and benzyltrimethylammonium fluoride, alone or in a mixture is present.

12. A polyurethane powder coating composition according to at least one of claims 1 to 11, **characterized in that** epoxy compounds, carbodiimides and/or 2-oxazolines are present as component D).

13. A polyurethane powder coating composition according to claim 12, **characterized in that** triglycidyl ether isocyanurate, EPIKOTE 828, phenylenebisoxazoline, 2-methyl-2-oxazoline, 2-hydroxyethyl-2-oxazoline, 2-hydroxypropyl-2-oxazoline, and/or 5-hydroxypentyl-2-oxazoline, alone or in a mixture is present.

14. A polyurethane powder coating composition according to at least one of claims 1 to 13, **characterized in that** levelling agents, light stabilizers, filler, additional catalysts and/or pigments are present as auxiliaries and additives E).

15. A process for preparing a polyurethane powder coating composition essentially containing
A) at least one uretdione-containing powder coating hardener based on an aliphatic, (cycle)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺ [R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B), in heatable equipment, with an upper temperature limit of from 120 to 130°C.

16. The use of at least one catalyst of the formula [NR¹R²R³R⁴] ⁺ [R⁵]⁻ , in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F, in a polyurethane powder coating composition containing uretdione groups.

17. The use according to claim 16, **characterized in that** compounds selected from methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride, and benzyltrimethylammonium fluoride, are used.

18. The use of
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺[R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B), for producing a powder coating.

19. The use according to claim 18, **characterized in that** starting compounds according to at least one of claims 2 to 14 are present.

20. The use according to claims 18-19, for producing a powder coating on metal, plastic, wood, glass, leather or another heat-resistant substrate.

21. A metal coating composition essentially containing a polyurethane powder coating composition comprising
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺[R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B).

22. A wood coating composition essentially containing a polyurethane powder coating composition comprising
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺ [R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B).

23. A leather coating composition essentially containing a polyurethane powder coating composition comprising
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺[R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B).

24. A plastics coating composition essentially containing a polyurethane powder coating composition comprising
A) at least one uretdione-containing powder coating hardener based on an aliphatic, (cyclo)aliphatic or cycloaliphatic polyisocyanate and a hydroxyl-containing compound, having a melting point of from 40 to 130°C, a free NCO content of less than 5% by weight, and a uretdione content of 6-18% by weight,
B) at least one hydroxyl-containing polymer having a melting point of from 40 to 130°C, and an OH number of between 20 and 200 mg KOH/gram,
C) at least one catalyst of the formula [NR¹R²R³R⁴]⁺[R⁵]⁻, in which R¹-R⁴ simultaneously or independently of one another are an alkyl, aryl, aralkyl, heteroaryl or alkoxyalkyl radical, each linear or branched, unbridged or bridged with other radicals R¹-R⁴, to form a cyclic, bicyclic or tricyclic system, possible bridging atoms including not only carbon but also heteroatoms, having 1-18 carbon atoms and each radical R¹-R⁴ may further contain one or more than one alcohol, amino, ester, keto, thio, urethane, urea or allophanate group, double bond, triple bond or halogen atom, and R⁵ is either OH or F,
such that the two components A) and B) are present in a ratio such that for each hydroxyl group of component B) there is from 0.3 to 1 uretdione group of component A), and the fraction of the catalyst under C) is 0.001-3% by weight of the total amount of components A) and B).

25. A metal coating according to claim 21 for an automobile body, motorbike or bicycle, construction component or household appliance.

26. A coating composition according to any of claims 21 to 25, **characterized in that**
D) a reactive compound is also present which is able to react at elevated temperature with any acid group that may be present in component B), in an amount such that for each acid group of the resin under B) there are 0.1-10 acid-scavenging units of the reactive compound D).

27. A coating composition according to any of claims 21 to 26, **characterized in that** auxiliaries and additives E) are present.

28. A coating composition according to any of claims 21 to 27, **characterized in that** compounds according to at least one of claims 2 to 14 are present.

## Revendications

1. Composition de peinture en poudre de polyuréthanne contenant essentiellement :
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F ;
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B).

2. Composition de peinture en poudre de polyuréthanne selon la revendication 1,
**caractérisée en ce que**
D) en plus un composé réactif, qui peut être mis à réagir à des températures supérieures, avec les groupes acides éventuellement présents du composant B), se trouve dans une quantité telle que sur chaque groupe acide de la résine en B), on récupère 0,1 à 10 unités acide de récupération du composé réactif D).

3. Composition de peinture en poudre de polyuréthanne selon la revendication 1 ou 2,
**caractérisée en ce que**
E) elle contient des adjuvants et des additifs.

4. Compositions de peinture en poudre de polyuréthanne selon au moins l'une des revendications 1 à 3,
**caractérisées en ce qu'**
elles contiennent, seuls ou en mélange, des durcisseurs de peinture en poudre contenant une uréthdione A) à base d'isophoronediisocyanate (IPDI), d'hexaméthylènecllisocyanate (HDI), de 2-méthylpentadiisocyanate (MPDI), de 2,2,4-triméthylhexaméthylènediisocyanate/2,4,4-triméthyl-hexaméthylènediisocyanate (TMDI), de norbornane diisocyanate (NBDI), de méthylènediphényl diisocyanate (MDI) et de tétraméthylxylylène diisocyanate (TMXDI).

5. Compositions de peinture en poudre de polyuréthanne selon la revendication 4,
**caractérisées en ce qu'**
elles contiennent des durcisseurs de peinture en poudre contenant une uréthdione à base d'IPDI et/ou de HDI.

6. Compositions de peinture en poudre de polyuréthanne selon au moins l'une des revendications 1 à 5,
**caractérisées en ce qu'**
elles contiennent, seuls ou en mélanges, des durcisseurs de peinture A) en poudre contenant une uréthdione à base de polyesters contenant des groupes hydroxyle, des polyéthioéthers, des polyéthers, des polycaprolactames, des polyépoxydes, des amides de polyesters, des polyuréthannes, des di-, tri- et/ou tétraalcools à bas poids moléculaire, des monoamines et/ ou des monoalcools.

7. Compositions de peinture en poudre de polyuréthanne selon la revendication 6,
**caractérisées en ce qu'**
elles contiennent des polyesters et/ou des dialcools monomères.

8. Compositions de peinture en poudre de polyuréthanne selon au moins l'une des revendications 1 à 7,
**caractérisées en ce qu'**
elles contiennent comme polymères B) contenant des groupes hydroxyle des polyesters, des polyéthers, des polyacrylates, des polyuréthannes et des polycarbonates, seuls ou en mélanges.

9. Compositions de peinture en poudre de polyuréthanne selon la revendication 8,
**caractérisées en ce qu'**
elles contiennent des polyesters ayant un indice OH entre 30 et 150 mg de KOH/g, un poids moléculaire moyen de 500 à 6 000 g/mole et un point de fusion entre 40 et 130 °C.

10. Compositions de peinture en poudre de polyuréthanne selon au moins l'une des revendications 1 à 9,
**caractérisées en ce qu'**
elles contiennent comme catalyseurs C) de l'hydroxyde et/ ou du fluorure de tétraalkylammonium.

11. Compositions de peinture en poudre de polyuréthanne selon au moins l'une des revendications 1 à 10,
**caractérisées en ce qu'**
elles contiennent des catalyseurs C) choisis parmi les hydroxyde de méthyltributylammonium, hydroxyde de méthyltriéthylammonium, hydroxyde de tétraméthylammonium, hydroxyde de tétraéthylammonium, hydroxye de tétrapropylammonium, hydroxyde de tétrabutylammonium, hydroxyde de tétrapentylammonium, hydroxye de tétrahexylammonium, hydroxyde de tétraoctylammonium, hydroxyde de tétradécylammonium, hydroxyde de tétradécyltrihexylammonium, hydroxyde de tétraoctyadécylammonium, hydroxyde de benzyltriméthylammonium, hydroxyde de benzyltriéthylammonium, hydroxyde de triméthylphénylammonium, hydroxyde de triéthylméthylammonium, hydroxyde de triméthylvinylammonium, fluorure de tétraméthylammonium, fluorure de tétraéthylammonium, fluorure de tétrabutylammonium, fluorure de tétraoctylammonium et de flurorure de benzyltriméthylammonium, seuls ou en mélanges.

12. Compositions de peinture en poudre de polyuréthanne selon au moins l'une des revendications 1 à 11,
**caractérisées en ce qu'**
elles contiennent comme composant D) des composés époxy, des carbodiimides et/ou des 2-oxazolines.

13. Compositions de peinture en poudre de polyuréthanne selon la revendication 12,
**caractérisées en ce qu'**
elles contiennent de l'isocyanurate de triglycidyléther, de l'EPIKOTE 828, de la phénylènbisoxazoline, de la 2-méthyl-2-oxazoline, de la X2-hydroxyéthyl-2-oxazoline, de la 2-hydroxypropyl-2-oxazoline et/ou de la 5-hydroxypentyl-2-oxazoline, seuls ou en mélanges.

14. Compositions de peinture en poudre de polyuréthanne selon au moins l'une des revendications 1 à 13,
**caractérisées en ce qu'**
elles contiennent comme adjuvants et additifs E) des produits nivelants, des agents de protection contre la lumière, une charge, des catalyseurs supplémentaires et/ ou des pigments.

15. Procédé de préparation de compositions de peinture en poudre de polyuréthanne, contenant essentiellement :
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
E) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F ;
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B), dans des appareils pouvant être chauffés à une limite supérieure de températures de 120 à 130 °C.

16. Utilisation d'au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F, dans des compositions de peinture en poudre de polyuréthanne contenant des groupes uréthdione.

17. Utilisation selon la revendication 16,
**caractérisée en ce qu'**
on utilise des composés choisis parmi les hydroxyde de méthyltributylammonium, hydroxyde de méthyltriéthylarnmonium, hydroxyde de tétraméthylammonium, hydroxyde de tétraéthylammonium, hydroxye de tétrapropylammonium, hydroxyde de tétrabutylammonium, hydroxyde de tétrapentylammonium, hydroxyde de tétrahexylammonium, hydroxyde de tétraoctylammonium, hydroxyde de tétradécylammonium, hydroxyde de tétradécyltrihexylammonium, hydroxyde de tétraoctadécylammonium, hydroxyde de benzyltriméthylammonium, hydroxyde de benzyltriéthylammonium, hydroxyde de triméthylphénylammonium, hydroxyde de triéthylméthylammonium, hydroxyde de triméthylvinylammonium, fluorure de tétraméthylammonium, fluorure de tétraéthylammonium, fluorure de tétrabutylammonium, fluorure de tétraoctylammonium et de flurorure de benzyltriméthylammonium.

18. Utilisation de
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F,
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B), pour la préparation de revêtements par peinture en poudre.

19. Utilisation selon la revendication 18,
**caractérisée en ce que**
des composés de départ selon au moins l'une des revendications 2 à 14 sont contenus.

20. Utilisation selon la revendication 18 ou 19, pour la préparation de revêtements par peinture en poudre sur des objets en métal, de matière synthétique, bois, verre, cuir ou autres, résistants à la chaleur.

21. Compositions de revêtement de métal, contenant essentiellement une composition de peinture en poudre constituée de :
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F,
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B).

22. Composition de revêtement de bois, contenant essentiellement une composition de peinture en poudre constituée de :
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130°C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F,
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B).

23. Compositions de revêtement de cuir, contenant essentiellement une composition de peinture de polyuréthanne en poudre constituée de:
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F,
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B).

24. Compositions de revêtement de matière synthétique, contenant essentiellement une composition de peinture de polyuréthanne en poudre constituée de :
A) au moins un durcisseur de peinture en poudre contenant une uréthdione, à base de polyisocyanates aliphatiques, (cyclo)aliphatiques ou cycloaliphatiques et de composés contenant des groupes hydroxyle, avec un point de fusion de 40 à 130 °C, une teneur en NCO libre inférieure à 5 % en poids et une teneur en uréthdione de 6 à 18 % en poids ;
B) au moins un polymère contenant des groupes hydroxyle avec un point de fusion de 40 à 130 °C et un indice OH entre 20 et 200 mg de KOH/gramme ;
C) au moins un catalyseur de formule [NR¹R²R³R⁴]⁺ [R⁵]⁻, dans laquelle R¹-R⁴ représentent simultanément ou indépendamment l'un de l'autre des radicaux alkyle, aryle, aralkyle, hétéroaryle, alkoxyalkyle, chaque fois linéaires ou ramifiés, non pontés ou pontés avec d'autres radicaux R¹-R⁴, avec formation de cycles, de bicycles ou de tricycles et les atomes de pontage peuvent être, outre le carbone, également des hétéroatomes, avec 1 à 18 atomes de carbone, et chaque radical R¹-R⁴ peut présenter en outre encore un ou plusieurs groupes alcool, amino, ester, céto, thio, uréthanne, urée, allophanate, des liaisons doubles, des liaisons triples ou des halogénoatomes, et R⁵ signifie soit OH, soit F,
de telle sorte que les deux composants A) et B) se trouvent dans le rapport selon lequel sur chaque groupe hydroxyle du composant B), vient 0,3 à 1 groupe uréthdione du composant A), et la proportion du catalyseur sous C) est de 0,001 à 3 % en poids de la quantité totale des composants A) et B).

25. Revêtement de métal selon la revendication 21, pour des carrosseries d'automobiles, de vélomoteurs et de bicyclettes, de pièces de construction et d'appareils ménagers.

26. Compositions de revêtement selon l'une des revendications 21 à 25,
**caractérisées en ce que**
D) en plus d'un composé réactif, qui peut être mis à réagir à températures supérieures, avec les groupes acides éventuellement présents du composant B), se trouve dans une quantité telle que sur chaque groupe acide de la résine en B), on récupère 0,1 à 10 unités acide de récupération du composé réactif D).

27. Compositions de revêtement selon l'une des revendications 21 à 26,
**caractérisées en ce qu'**
elles contiennent des adjuvants et des additifs E).

28. Compositions de revêtement selon l'une des revendications 21 à 27,
**caractérisées en ce qu'**
elles contiennent ces composés selon au moins l'une des revendications 2 à 14.
